# EUROPÄISCHE PATENTSCHRIFT

(11) **EP 2 353 370 B1**
(45) Veröffentlichungstag und Bekanntmachung des Hinweises auf die Patenterteilung: **18.12.2013**
(21) Anmeldenummer: 11153626.4
(22) Anmeldetag: 08.02.2011
(51) Int. Cl.: A01G 13/02

(54) **Haube zum Aufsetzen auf einen Betonpfosten**
Cap for mounting on a concrete post
Chapeau destiné au montage sur un poteau en béton

(30) Priorität: 09.02.2010 DE 102010001692
(43) Veröffentlichungstag der Anmeldung: 10.08.2011
(73) Patentinhaber: BayWa Aktiengesellschaft, 81925 München (DE)
(72) Erfinder: Holzwarth, Rudolf, 88255 Baindt (DE)
(74) Vertreter: Pfiz, Thomas

(56) Entgegenhaltungen:
- AU-B2- 746 624
- FR-A1- 2 388 488
- FR-A1- 2 678 805
- FR-A1- 2 898 616

## Beschreibung

Die Erfindung betrifft eine Haube zum Aufsetzen auf einen Betonpfosten bei einer aus Betonpfosten und Drähten gebildeten Tragkonstruktion und darauf aufgespannten netzartigen Gewebebahnen für Wetterschutzüberdachungen für Pflanzenkulturen. Die Erfindung betrifft weiter Wetterschutzüberdachungen mit solchen Haubenvorrichtungen.

Es ist bekannt, Schutznetze für Pflanzenkulturen an Spanndrähten einer aus Pfählen gebildeten Unterkonstruktion dachartig aufzuspannen, um Pflanzenkulturen vor allem gegen Hagel und gegebenenfalls auch gegen Regen zu schützen. Die im Abstand zueinander angeordneten Pfähle, welche die Spanndrähte zum Anbringen der Schutznetze tragen, sind üblicherweise entweder aus Holz oder Beton gebildet. Solche Pfähle bzw. Stützpfosten für Hagel- und/oder Regenschutzsysteme müssen eine hohe Stützlast aufnehmen können, da die von dem Schutznetz aufgefangenen Hagelkörner eine hohe Druckbelastung auf die Stützen übertragen. Problematisch bei Betonpfosten ist, dass die abgesägten Stirnflächen keinen Ansatzpunkt für eine Verankerung von Befestigungsteilen aufweisen und somit eine sichere Verbindung mit Spannseilen erschweren. Um hier Abhilfe zu schaffen, werden in der Praxis Kunststoffkappen eingesetzt, die entsprechende Schraubteile für Seilverschraubungen beinhalten. Die Kunststoffkappen selbst werden durch innenliegende Lamellen auf den Betonsäulen klemmend gehalten. Bei starken Belastungen, beispielsweise bei querflächigem Wind und zusätzlichem Hageleintrag, ist eine solche Verbindung jedoch instabil. Zudem ergeben sich durch die Verbindung der Kappen mit den Querseilen Abziehkräfte, denen die Kunststoffkappen oft nicht gewachsen sind.

Eine vergleichbare Abdeckung für einem Pfosten ist in der FR 2 388 488 A beschrieben.

Ausgehend hiervon liegt der Erfindung die Aufgabe zugrunde, die im Stand der Technik bekannten Vorrichtungen weiter zu verbessern und so zu gestalten, dass mit einer einfach herstell- und montierbaren Konstruktion eine hohe Belastungsfestigkeit gewährleistet ist.

Zur Lösung dieser Aufgabe wird die im Patentanspruch 1 bzw. 14 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Vorrichtung zum Aufsetzen auf den Betonpfosten bereit zu stellen, die eine kraftschlüssige Verbindung zu dem Betonpfosten gewährleistet und ggf. eine einfache Verbindung mit weiteren Montageelementen ermöglicht. Dementsprechend wird erfindungsgemäß eine Haube zum Aufsetzen auf einen Betonpfosten vorgeschlagen, umfassend einen entsprechend der Umfangskontur des Pfostens angepassten bzw. geformten Rahmen, einen an dem Rahmen angebrachten Haltebügel und eine Schutzkappe, wobei der Haltebügel an einer Seite des Rahmens mittels eines Spannelements kraftschlüssig gegen den Pfosten andrückbar ist. Dadurch wird eine zuverlässige Verbindung zwischen dem formstarren Betonpfosten und der Haube erzielt und eine deutlich höhere Belastungssicherheit für den gesamten Aufbau erreicht. Durch die Schutzkappe können sowohl die Montageteile als auch ein darüber geführter Netzaufbau gegen Beschädigung geschützt werden.

Von besonderem Vorteil ist es, wenn der Rahmen und der Haltebügel aus Metall, insbesondere aus einem verzinkten Flachstahlmaterial bestehen. In herstellungstechnischer Hinsicht ist es von Vorteil, wenn die Schutzkappe aus Kunststoff besteht. Dadurch wird auch gewährleistet, dass das Netz an der darunterliegenden Haltestruktur keinen Schaden nimmt. Weiterhin ist es für eine vereinfachte Montage vorteilhaft, wenn die Schutzkappe eine Durchstecköffnung für ein mit dem Haltebügel verbindbares oder verbundenes Montageelement, insbesondere eine Schraube besitzt.

Vorteilhafterweise ist der Haltebügel mit seinen Enden an dem Rahmen angeordnet und umfasst dabei U-förmig das obere Ende des Pfostens. Hierbei ist es günstig, wenn der Haltebügel schmaler ist als das von ihm umfasste obere Ende des Pfostens.

Eine weitere Verbesserung sieht vor, dass der Haltebügel mit einer Haltestruktur versehen ist, die einen Form- und/oder Reibschluss zwischen Haltebügel und Pfosten erlaubt. Die Haltestruktur kann dabei durch eine Press- bzw. Stanzstruktur oder ein Raster von Schweißpunkten gebildet sein.

Eine weitere Stabilisierungsfunktion lässt sich dadurch erreichen, dass das Spannelement eine Schraube ist, die in einem Gewinde vorzugsweise einer an einer Seite des Rahmens fixierten Mutter geführt wird. Dabei ist es besonders günstig, wenn der Haltebügel an seinem dem Spannelement zugewandten Ende als gegen den Pfosten auslenkbare Federzunge ausgebildet ist. Gleichzeitig ist es von Vorteil, wenn der Haltebügel an seinem dem Spannelement abgewandten Ende starr mit dem Rahmen verbunden bzw. daran angeformt ist.

Vorteilhafterweise ist der Haltebügel an seiner Oberseite mit einem nach oben abstehenden Schraubschaft zum Aufsetzen weiterer Montageelemente, beispielsweise zur Halterung von Drähten und zur Aufnahme von netzartigen Gewebebahnen versehen oder verbindbar.

In einer sehr vorteilhaften Ausführung der erfindungsgemäßen Haube weist der Haltebügel in seinem oberen, das obere Ende des Pfostens umfassenden Bereich eine von dem Pfostenende beabstandete, abgerundete bzw. bogenförmige Leitfläche auf. Dies hat den Vorteil, dass nach Aufsetzen auf den Pfosten ein Freiraum verbleibt, der zur Montage genutzt werden kann. Zudem kann dadurch eine materialschonende Aufspannung erreicht werden. Dabei ist es auch vorteilhaft, wenn die Schutzkappe der Form der abgerundeten Leitfläche angepasst ist.

Ein weiterer Erfindungsaspekt besteht in einer Wetterschutzüberdachung insbesondere für Pflanzenkulturen mit einer aus Betonpfosten und Drähten gebildeten Tragkonstruktion und darauf aufgespannten netzartigen Gewebebahnen, wobei auf den Betonpfosten erfindungsgemäße Hauben klemmend gehalten sind.

Gemäß einer vorteilhaften Ausgestaltung sind die Haltebügel der Hauben jeweils mit einem Schraubschaft zum Aufsetzen von Montageelementen insbesondere zur Durchführung der Drähte und zur Aufnahme der netzartigen Gewebebahnen verbunden.

Von besonderem Vorteil ist es auch, wenn die Gewebebahnen zweckmäßig mittels Ösen an dem Schraubschaft gegen Querverlagerung gesichert sind.

Im Folgenden wird die Erfindung anhand eines in der Zeichnung in schematischer Weise dargestellten Ausführungsbeispiels näher erläutert. Es zeigen
- Fig. 1: eine Wetterschutzüberdachung für reihenförmige Pflanzenkulturen in schaubildlicher Darstellung;
- Fig. 2A und B: eine perspektivische Ansicht und eine teils geschnittene Seitenansicht des Rahmens und des Haltebügels einer Klemmhaube;
- Fig. 3: eine Explosionsdarstellung des gesamten Aufbaus der auf einen Betonpfosten der Wetterschutzüberdachung aufgesetzten Klemmhaube;
- Fig. 4A: eine perspektivische Darstellung einer Schrägpfostenverspannung mittels der Klemmhaube; und
- Fig. 4B: eine aufgebrochene Seitenansicht der montierten Haube nach Fig. 4A.

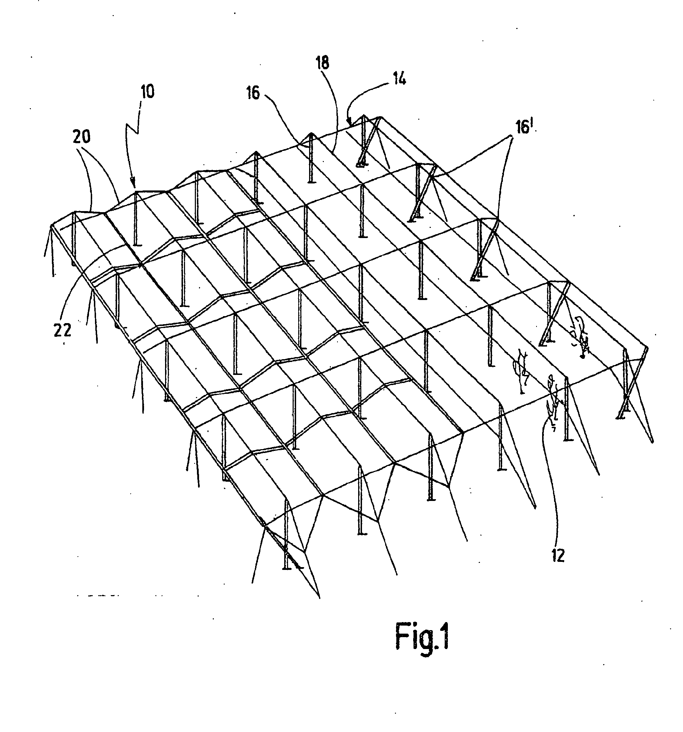

Die in der Figur 1 dargestellte Wetterschutzüberdachung 10 lässt sich über reihenförmig angeordneten Pflanzenkulturen 12 aufspannen, um während der Vegetationsperiode Wetterschäden und speziell Hagelschäden zu verhindern. Die Überdachung 10 umfasst eine Tragkonstruktion 14 mit auf Pfosten 16 gespannten Firstdrähten 18, auf welche Gewebebahnen 20 aufgelegt sind. Der Abstand der einzelnen Reihen 22 kann beispielsweise 2 bis 5 m betragen, während die Länge bei einigen 100 m liegen kann, wobei die die Wetterschutzüberdachung seitlich begrenzenden Stützen bzw. Pfosten 16' nach außen geneigt abgespannt sind.

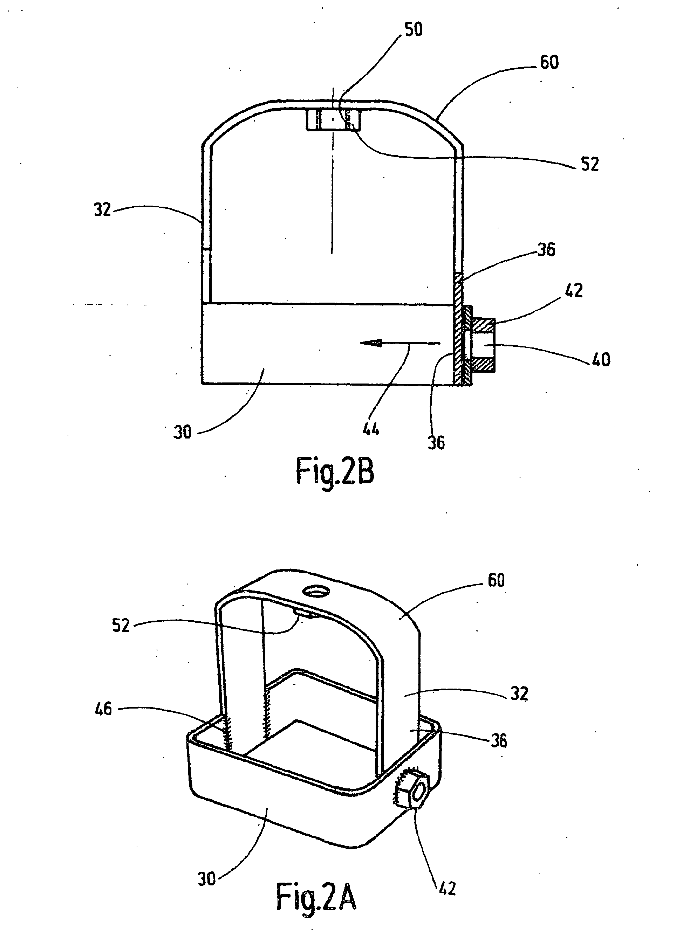

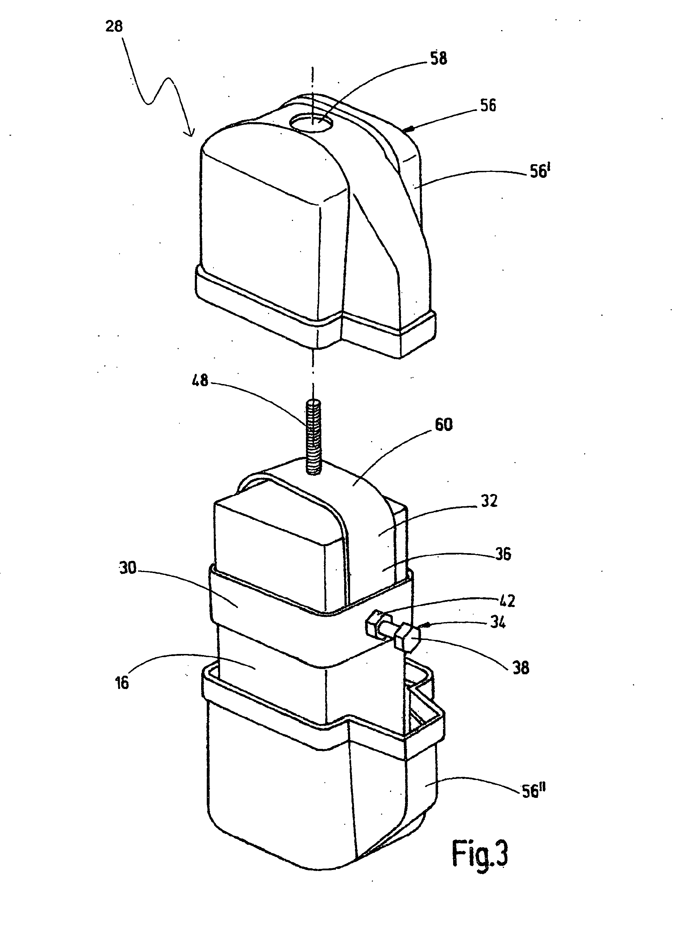

Wie aus den Figuren 2A, 2B und 3 ersichtlich, umfassen die auf die Pfosten 16, 16' aufsetzbaren Klemmhauben 28 jeweils einen der Umfangskontur des Pfostens 16 angepassten Rahmen 30 und einen an dem Rahmen angeformten Haltebügel 32. Rahmen 30 und Haltebügel 32 bestehen aus Metall, insbesondere aus verzinktem Walzstahl. Der Haltebügel 32 ist dabei senkrecht zum Rahmen 30 angeordnet und umfasst, wenn die Anordnung auf die Pfosten 16, 16' aufgesetzt wird, deren obere Enden (vgl. Figur 3). Der Haltebügel 32 ist bevorzugt mit einer (nicht gezeigten) Haltestruktur versehen, die einen Form- und/oder Reibschluss zwischen Haltebügel 32 und Pfosten 16, 16' erlaubt. Die Haltestruktur wird vorteilhafterweise durch ein Raster von Schweißpunkten oder alternativ durch eine eingeprägte Oberflächenkontur gebildet. Die Haltestruktur kann sich zusätzlich etwas in das Pfostenmaterial eingraben und erhöht auf diese Weise die Haltekraft.

Der Haltebügel 32 kann an einer Seite des Rahmens 30 mittels eines Spannelements 34 kraftschlüssig gegen die Pfosten 16, 16' gepresst werden. Er ist dazu auf seiner dem Spannelement 34 zugewandten Seite als querbewegliche Federzunge 36 ausgebildet (vgl. Fig. 2B). Das Spannelement 34 selbst besteht bevorzugt aus einer Schraube 38 (vgl. Figur 3), die in einem Gewinde 40 einer an einer Seite des Rahmens 30 fixierten Mutter 42 geführt wird. Durch entsprechendes Drehen der Schraube 38 kann die Federzunge 36 in Richtung des Pfeils 44 kraftschlüssig seitlich gegen die Pfosten 16, 16' gepresst werden und sorgt auf diese Weise für eine feste Verbindung.

Auf seiner dem Spannelement 34 abgewandten Seite ist der Haltebügel 32 starr, beispielsweise über Schweißnähte 46 mit dem Rahmen 30 verbunden.

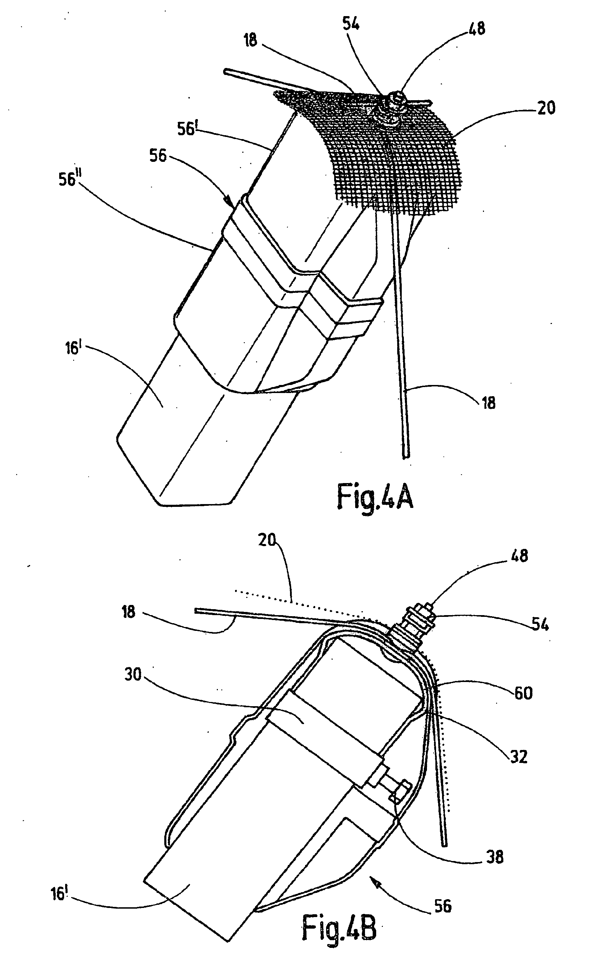

Wie aus Figur 3 ersichtlich, ist der Haltebügel 32 an seiner Oberseite mit einer mit ihrem Schaft nach oben abstehenden Schraube 48 versehen. Die Schraube 48 ist in einem Gewinde 50 einer an der Unterseite des Haltebügels 32 angeschweißten Mutter 52 geführt (Fig. 2A, 2B). Der Schraubschaft kann ggf. auch direkt an dem Haltebügel 32 fixiert werden. Der Schraubkopf kann auch von dem Haltebügel entfernt sein, um das Einschrauben von oben her zu ermöglichen. Die nach oben über den Haltebügel 32 überstehende Schraube 48 dient der Aufnahme von weiteren Montageelementen 54, insbesondere für die Durchführung der Drähte 18 und für die Aufnahme der netzartigen Gewebebahnen 20, wie es in Fig. 4 gezeigt ist. Die auf die Pfosten aufgesetzte Anordnung von Rahmen 30 und Haltebügel 32 wird zum Schutz der netzartigen Gewebebahnen 20 vor der darunterliegenden Haltestruktur mit einer Schutzkappe 56 umgeben, die gegebenenfalls teilbar ist und vorzugsweise aus Kunststoff besteht.

Fig. 3 zeigt eine Explosionszeichnung eines beispielhaften Aufbaus der Klemmhaube 28. Auf die Pfosten 16, 16' wird zunächst der untere Teil 56'' der Schutzkappe 56, dessen Boden eine den Pfosten 16, 16' angepasste Öffnung aufweist, aufgeschoben. Anschließend wird die Anordnung aus Rahmen 30 und Haltebügel 32 auf den Pfosten aufgesetzt und mittels Schraube 38 verspannt. Nun wird der obere Teil 56' der Schutzkappe 56 aufgesteckt, der an seinem oberen Ende eine Durchlassöffnung 58 für die Schraube 48 aufweist. Denkbar ist es auch, dass die Schutzkappe nur aus einem oberen Teil 56' besteht und nach unten offen bleibt.

Auf dieser Anordnung können die Spanndrähte 18 und die netzartige Gewebebahn 20, in der eine zweckmäßig durch eine nicht gezeigte Öse berandete Gewebeöffnung geschaffen wurde, durch die Montageelemente 54 fixiert werden.

Wie aus den Figuren 2A, 2B und 3 erkennbar weist der Haltebügel 32 in seinem oberen, das obere Ende der Pfosten 16, 16' umfassenden Bereich eine abgerundete Leitfläche 60 auf. Durch die Abrundung kann die aus Rahmen 30 und Haltebügel 32 bestehende Anordnung nur bis zu einer gewissen Höhe auf die Pfosten 16, 16' aufgesetzt werden, so dass dazwischen ein Freiraum verbleibt, der gegebenenfalls für Montagezwecke genutzt werden kann. In einer besonders vorteilhaften Ausführungsform ist der obere Teil 56' der Schutzkappe 56 der Kontur der abgerundeten Leitfläche 60 angepasst, so dass durch die Rundung eine günstige Drahtführung erreicht wird und Beschädigungen der Gewebebahn und Schutzkappe durch die formkomplementäre untere Abstützung vermieden werden.

Vorteilhaft ist weiterhin, wenn die netzartigen Gewebebahnen 20 im Bereich der Hauben 28 keine Störkontur für den Netzablauf erfahren. Der Haltebügel 32 weist dazu eine geringere Breite auf als das von ihm umfasste obere Ende des Pfostens 24. Es verbleibt somit seitlich des Haltebügels 32 genügend Freiraum, um auch hier durch eine abgerundete Kontur des oberen Schutzkappenteils 56' die netzartigen Gewebebahnen 20 günstig zu führen.

## Patentansprüche

1. Haube zum Aufsetzen auf einen Betonpfosten (16, 16') insbesondere für Wetterschutzüberdachungen, umfassend einen zum Umgreifen der Umfangskontur des Betonpfostens (16, 16') angepassten Rahmen (30), **dadurch gekennzeichnet daß** an dem Rahmen (30) ein zum Um-fassen des oberen Endes des Betonpfostens (16, 16') ausgebildeter Haltebügel (32) angebracht ist und die Haube eine den Rahmen (30) und Haltebügel (32) überdeckende Schutzkappe (56) aufweist, wobei der Haltebügel (32) an einer Seite des Rahmens (30) mittels eines Spannelements (34) kraftschlüssig gegen den Betonpfosten (16, 16') spannbar ist.

2. Haube nach Anspruch 1, **dadurch gekennzeichnet, dass** der Rahmen (30) und der Haltebügel (32) aus Metall, insbesondere aus verzinktem Flachstahl bestehen.

3. Haube nach Anspruch 1 oder 2, **dadurch gekennzeichnet, dass** die vorzugsweise aus Kunststoff bestehende Schutzkappe (56) einteilig oder teilbar ausgebildet ist und eine Durchstecköffnung für ein mit dem Haltebügel (32) verbundenes oder verbindbares Montageelement, insbesondere einen Schraubschaft (48) besitzt.

4. Haube nach einem der Ansprüche 1 bis 3, **dadurch gekennzeichnet, dass** der Haltebügel (32) mit seinen Enden an dem Rahmen (30) angeordnet ist und Uförmig das obere Ende des Pfostens (16, 16') umfasst.

5. Haube nach Anspruch 4, **dadurch gekennzeichnet, dass** der Haltebügel (32) eine geringere Breite aufweist als das von ihm umfasste obere Ende des Pfostens (16, 16'), so dass der Pfosten beidseitig über den Haltebügel übersteht.

6. Haube nach einem der Ansprüche 1 bis 5, **dadurch gekennzeichnet, dass** der Haltebügel (32) mit einer Haltestruktur versehen ist, die einen Form-und/oder Reibschluss mit dem Pfosten (16, 16') erlaubt.

7. Haube nach Anspruch 6, **dadurch gekennzeichnet, dass** die Haltestruktur durch eingeprägte oder gestanzte Ausformungen oder ein Raster von Schweißpunkten gebildet ist.

8. Haube nach einem der Ansprüche 1 bis 7, **dadurch gekennzeichnet, dass** das Spannelement (34) eine Schraube (38) ist, die in einem Gewinde (40) vorzugsweise einer an einer Seite des Rahmens (30) fixierten Mutter (42) geführt wird.

9. Haube nach einem der Ansprüche 1 bis 8, **dadurch gekennzeichnet, dass** der Haltebügel (32) an seinem dem Spannelement (34) zugewandten Ende als gegen den Pfosten (16, 16') auslenkbare Federzunge (36) ausgebildet ist.

10. Haube nach einem der Ansprüche 1 bis 9, **dadurch gekennzeichnet, dass** der Haltebügel (32) an seinem von dem Spannelement (34) entfernten Ende starr mit dem Rahmen (30) verbunden ist.

11. Haube nach einem der Ansprüche 1 bis 10, **dadurch gekennzeichnet, dass** der Haltebügel (32) an seiner Oberseite mit einem nach oben abstehenden Schraubschaft (48) versehen oder verbindbar ist.

12. Haube nach einem der Ansprüche 1 bis 11, **dadurch gekennzeichnet, dass** der Haltebügel (32) in seinem oberen, das obere Ende der Pfosten (16, 16') umfassenden Bereich eine abgerundete Leitfläche (60) aufweist.

13. Haube nach einem der Ansprüche 1 bis 12, dadurch gekenntzeichnet, dass die Form der Schutzkappe (56) einer abgerundeten Kontur des Haltebügels (32) angepasst ist.

14. Wetterschutzüberdachung insbesondere für Pflanzenkulturen mit einer aus Betonpfosten (16, 16') und Drähten (18) gebildeten Tragkonstruktion und darauf aufgespannten netzartigen Gewebebahnen (20), **gekennzeichnet durch** auf den Betonpfosten (16, 16') klemmend gehaltene Hauben nach einem der vorhergehenden Ansprüche.

15. Wetterschutzüberdachung nach Anspruch 14, **dadurch gekennzeichnet, dass** die Haltebügel (32) der Hauben jeweils mit einem Schraubschaft (48) zum Aufsetzen von Montageelementen (54) insbesondere zur Durchführung der Drähte (18) und zur Aufnahme der netzartigen Gewebebahnen (20) verbunden sind.

## Claims

1. Hood for placing on a concrete post (16, 16') in particular for weather protection canopies, comprising a frame (30) adapted for engaging around the peripheral contour of the concrete post (16, 16'), **characterized in that** a retaining bracket (32) designed to surround the upper end of the concrete post (16, 16') is mounted on the frame (30), and the hood has a protective cap (56) covering the frame (30) and retaining bracket (32), wherein the retaining bracket (32) can be clamped non-positively against the concrete post (16, 16') on one side of the frame (30) by means of a clamping element (34).

2. Hood according to Claim 1, **characterized in that** the frame (30) and the retaining bracket (32) are made of metal, in particular of galvanized flat steel.

3. Hood according to Claim 1 or 2, **characterized in that** the protective cap (56), which is preferably made of plastic, is designed in one part or such that it can be divided and has a through opening for a mounting element, in particular a screw shaft (48), which is connected or can be connected to the retaining bracket (32).

4. Hood according to one of Claims 1 to 3, **characterized in that** the retaining bracket (32) is arranged with its ends on the frame (30) and surrounds the upper end of the post (16, 16') in a U-shaped manner.

5. Hood according to Claim 4, **characterized in that** the retaining bracket (32) has a smaller width than the upper end of the post (16, 16') that is surrounded thereby, with the result that the post projects on both sides beyond the retaining bracket.

6. Hood according to one of Claims 1 to 5, **characterized in that** the retaining bracket (32) is provided with a retaining structure which allows a positive and/or frictional connection to the post (16, 16').

7. Hood according to Claim 6, **characterized in that** the retaining structure is formed by impressed or stamped formations or by a grid of weld points.

8. Hood according to one of Claims 1 to 7, **characterized in that** the clamping element (34) is a screw (38) which is guided in a thread (40) preferably of a nut (42) fixed on one side of the frame (30).

9. Hood according to one of Claims 1 to 8, **characterized in that**, at its end facing the clamping element (34), the retaining bracket (32) is designed as a spring tongue (36) which can be deflected against the post (16, 16').

10. Hood according to one of Claims 1 to 9, **characterized in that**, at its end remote from the clamping element (34), the retaining bracket (32) is rigidly connected to the frame (30).

11. Hood according to one of Claims 1 to 10, **characterized in that** the retaining bracket (32) is provided at its upper side with an upwardly projecting screw shaft (48) or can be connected thereto.

12. Hood according to one of Claims 1 to 11, **characterized in that** the retaining bracket (32) has a rounded guide surface (60) in its upper region surrounding the upper end of the post (16, 16').

13. Hood according to one of Claims 1 to 12, **characterized in that** the shape of the protective cap (56) is adapted to a rounded contour of the retaining bracket (32).

14. Weather protection canopy in particular for plant crops comprising a supporting construction formed from concrete posts (16, 16') and wires (18), and net-like fabric sheets (20) braced on said supporting construction, **characterized by** hoods according to one of the preceding claims which are held clamped on the concrete posts (16, 16').

15. Weather protection canopy according to Claim 14, **characterized in that** the retaining brackets (32) of the hoods are in each case connected to a screw shaft (48) for attaching mounting elements (54) in particular for guiding through the wires (18) and for receiving the net-like fabric sheets (20).

## Revendications

1. Chapeau destiné à être placé sur un poteau en béton (16, 16'), en particulier pour des couvertures de protection contre les intempéries, comprenant un cadre (30) prévu pour s'engager autour du contour périphérique du poteau en béton (16, 16'), **caractérisé en ce qu'**un étrier de retenue (32) réalisé pour entourer l'extrémité supérieure du poteau en béton (16, 16') est monté sur le cadre (30) et le chapeau présente un capuchon de protection (56) recouvrant le cadre (30) et l'étrier de retenue (32), l'étrier de retenue (32) pouvant être serré par engagement par force contre le poteau en béton (16, 16') au niveau d'un côté du cadre (30) au moyen d'un élément de serrage (34).

2. Chapeau selon la revendication 1, **caractérisé en ce que** le cadre (30) et l'étrier de retenue (32) sont fabriqués en métal, en particulier en acier plat galvanisé.

3. Chapeau selon la revendication 1 ou 2, **caractérisé en ce que** le capuchon de protection (56) constitué de préférence de plastique est réalisé d'une seule pièce ou de manière à pouvoir être divisé et présente une ouverture traversante pour un élément de montage, en particulier une tige de vis (48), connecté ou pouvant être connecté à l'étrier de retenue (32).

4. Chapeau selon l'une quelconque des revendications 1 à 3, **caractérisé en ce que** l'étrier de retenue (32) est disposé avec ses extrémités sur le cadre (30) et entoure en forme de U l'extrémité supérieure du poteau (16, 16').

5. Chapeau selon la revendication 4, **caractérisé en ce que** l'étrier de retenue (32) présente une plus faible largeur que l'extrémité supérieure du poteau (16, 16') entourée par celui-ci, de telle sorte que le poteau dépasse des deux côtés au-delà de l'étrier de retenue.

6. Chapeau selon l'une quelconque des revendications 1 à 5, **caractérisé en ce que** l'étrier de retenue (32) est muni d'une structure de retenue qui permet un engagement par correspondance de forme et/ou par friction avec le poteau (16, 16').

7. Chapeau selon la revendication 6, **caractérisé en ce que** la structure de retenue est formée par des formations gaufrées ou estampées ou par une trame de points de soudage.

8. Chapeau selon l'une quelconque des revendications 1 à 7, **caractérisé en ce que** l'élément de serrage (34) est une vis (38) qui est guidée dans un filetage (40) de préférence d'un écrou (42) fixé sur un côté du cadre (30).

9. Chapeau selon l'une quelconque des revendications 1 à 8, **caractérisé en ce que** l'étrier de retenue (32) est réalisé au niveau de son extrémité tournée vers l'élément de serrage (34) sous forme de langue élastique (36) pouvant être déviée vers le poteau (16, 16').

10. Chapeau selon l'une quelconque des revendications 1 à 9, **caractérisé en ce que** l'étrier de retenue (32) est connecté rigidement au cadre (30) au niveau de son extrémité éloignée de l'élément de serrage (34).

11. Chapeau selon l'une quelconque des revendications 1 à 10, **caractérisé en ce que** l'étrier de retenue (32) est muni au niveau de son côté supérieur d'une tige de vis (48) faisant saillie vers le haut ou bien peut être connecté à celle-ci.

12. Chapeau selon l'une quelconque des revendications 1 à 11, **caractérisé en ce que** l'étrier de retenue (32) présente, dans sa région supérieure, comprenant l'extrémité supérieure du poteau (16, 16'), une surface de guidage arrondie (60).

13. Chapeau selon l'une quelconque des revendications 1 à 12, **caractérisé en ce que** la forme du capuchon de protection (56) est adaptée à un contour arrondi de l'étrier de retenue (32).

14. Couverture de protection contre les intempéries, en particulier pour des cultures de plantes comprenant une construction de support formée de poteaux en béton (16, 16') et de fils métalliques (18) et comprenant des bandes de tissu de type filet (20) tendues sur celle-ci, **caractérisée par** des chapeaux retenus par serrage sur les poteaux en béton (16, 16') selon l'une quelconque des revendications précédentes.

15. Couverture de protection contre les intempéries selon la revendication 14, **caractérisée en ce que** les étriers de retenue (32) des chapeaux sont à chaque fois connectés à une tige de vis (48) pour placer des éléments de montage (54) en particulier pour le passage des fils métalliques (18) et pour recevoir les bandes de tissu de type filet (20).
